Europäisches Patentamt

European Patent Office

Office européen des brevets

(19)

(11) **EP 0 777 071 B1**

(12) **FASCICULE DE BREVET EUROPEEN**

(45) Date de publication et mention
de la délivrance du brevet:
**10.10.2001 Bulletin 2001/41**

(51) Int Cl.⁷: **F16H 61/02**

(21) Numéro de dépôt: **96402518.3**

(22) Date de dépôt: **22.11.1996**

(54) **Procédé de commande d'une transmission automatique en fonction du style de conduite de conducteur**

Verfahren zur Steuerung eines automatischen Getriebes als Funktion der Fahrweise des Fahrers

Control method for an automatic transmission as a function of a person's driving style

(84) Etats contractants désignés:
**DE ES GB IT**

(30) Priorité: **30.11.1995 FR 9514168**

(43) Date de publication de la demande:
**04.06.1997 Bulletin 1997/23**

(73) Titulaire: **RENAULT**
**92109 Boulogne-Billancourt (FR)**

(72) Inventeurs:
• **Desreumaux, Laurent**
**91150 Etampes (FR)**
• **Taffin, Christian**
**78400 Chatou (FR)**

(56) Documents cités:
**EP-A- 0 144 608      EP-A- 0 347 261**
**EP-A- 0 406 615      EP-A- 0 634 591**
**EP-A- 0 638 742      DE-A- 4 312 717**
**US-A- 5 152 192**

**Description**

La présente invention se rapporte à la commande des transmissions automatiques ou automatisées à rapports étagés, du type boîte de vitesses automatique comportant un train épicycloïdal associé à plusieurs freins et embrayages placés sous le contrôle d'un calculateur électronique, ou du type comportant un ensemble de baladeurs et de synchroniseurs à commande robotisée.

Le style de conduite d'un conducteur routier peut être plus ou moins énergique, ou "sportif". Pour répondre aux attentes du conducteur, de nombreuses boîtes de vitesses automatiques disposent aujourd'hui d'un premier mode de fonctionnement privilégiant une consommation réduite (mode "ECO"), et d'un second mode de fonctionnement privilégiant la nervosité du véhicule (mode "SPORTIF"), entre lesquels le conducteur peut commuter à l'aide d'un organe de commande prévu sur son poste de conduite.

Une gestion plus élaborée de ces problèmes de comportement, consiste à détecter le style de conduite d'un conducteur en vue d'adapter automatiquement les lois de changement de rapport d'une transmission automatique aux attentes de celui-ci.

La publication EP-0.638.742 décrit à ce sujet une stratégie consistant à calculer une valeur moyenne de l'ouverture du papillon des gaz et de la dérivée de cette ouverture, et à déterminer en fonction de ces valeurs, les conditions d'application de différentes lois de passage disponibles, selon des règles de calcul du type logique floue. Outre le nombre élevé de mesures et d'opérations de calcul nécessaires, la stratégie proposée dans cette publication présente le double inconvénient de reposer sur une appréciation incomplète du comportement du conducteur, et de ne pas tenir compte des conditions de roulage.

Par la publication EP 0347 261, on connaît un procédé de commande d'une transmission automatique conforme au préambule de la revendication 1 avec plusieurs lois de passage, selon lequel on prend en considération la réserve de force motrice du véhicule dans un ratio correspondant au rapport de la puissance instantanée sur la puissance disponible, sans tenir compte des conditions de routage du véhicule.

La présente invention vise à associer l'activité réelle du conducteur aux conditions de roulage de son véhicule, pour imposer différentes lois de passage au calculateur d'une transmission automatique.

Elle concerne un procédé de commande d'une transmission automatique à rapports étagés en fonction du style de conduite du conducteur. Ce procédé est caractérisé en ce que le calculateur de la transmission applique différentes lois de passage des rapports selon la valeur d'un coefficient d'activité $K_{act}$ dépendant de la vitesse de déplacement du véhicule (v) du rapport engagé (n), du régime moteur ($\omega$), et de l'activation du frein (f).

Selon un mode de réalisation particulier, si le conducteur a le pied appuyé sur l'accélérateur, $K_{act}$ est égal au rapport $\gamma/\gamma_m$, de l'accélération instantanée du véhicule $\gamma$, à son accélération maximale potentielle pied à fond $\gamma_m$ sur le même rapport.

De préférence, si le conducteur freine, $(K_{act})$ est égal au rapport $\gamma/\gamma_m$, de la décélération instantanée du véhicule $\gamma$, à sa décélération potentielle maximale $\gamma_m$.

D'autres caractéristiques et avantages de l'invention apparaîtront clairement à la lecture de la description suivante d'un mode de réalisation particulier de celle-ci en se rapportant aux dessins annexés, sur lesquels :

- la figure 1 présente sommairement le procédé de l'invention, et
- la figure 2 regroupe dans un schéma fonctionnel, les principales étapes de la stratégie proposée.

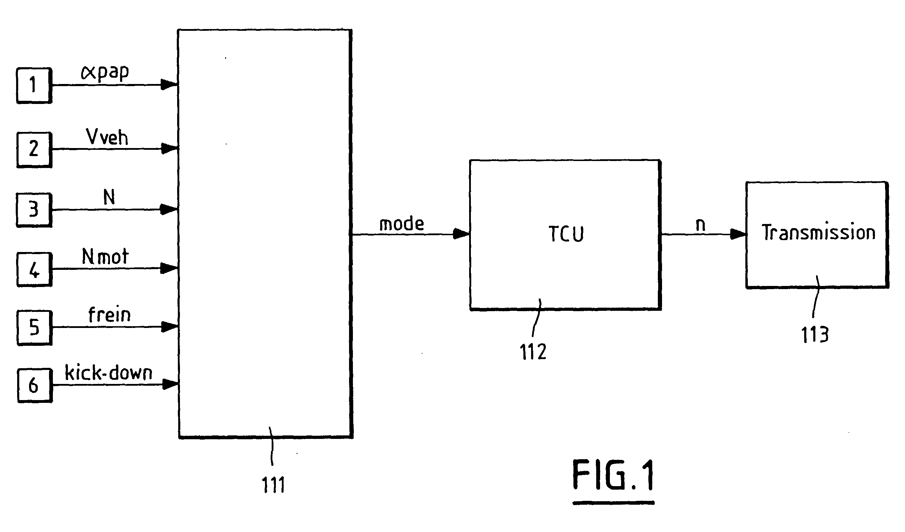

Les différentes informations 1 à 6 mentionnées sur la figure 1 sont exploitées conformément à l'invention par une unité spécifique 111 de reconnaissance du style de conduite, en vue d'imposer au calculateur ou T.C.U (Transmission control unit) 112 de la transmission, responsable de façon conventionnelle du choix de son rapport n, un mode de fonctionnement correspondant au style de conduite reconnu. Conformément à l'invention, le rapport n imposé à la transmission par le T.C.U. 112 est donc déterminé en fonction du style de conduite reconnu par l'unité 111, sur la base des informations suivantes :

- 1, ouverture du papillon d'admission des gaz $\alpha_{pap}$,
- 2, vitesse du véhicule v,
- 3, rapport engagé n,
- 4, régime moteur $\omega$,
- 5, utilisation du frein f,
- 6, utilisation du rétro-contact k ("kick-down"), en fin de course de pédale d'accélérateur (si il est disponible sur le véhicule).

Les informations f et k étant des informations de type "contact", sont des signaux binaires (0 ou 1), tandis que les autres informations, traduisant des variations d'état continues, sont des signaux évoluant de façon progressive à l'intérieur de plages de valeur.

Les modes de fonctionnement imposés au calculateur 112 par l'unité 111 en fonction du style de conduite du conducteur peuvent par exemple être au nombre de trois, qualifiés respectivement d'économique ("ECO"), de "NORMAL" et de sportif "SPORT", traduisant les aspirations du conducteur en matière de réduction de consommation ou de nervosité, de la part de son véhicule. On peut cependant envisager un nombre différent de modes de fonctionnement, ou la prise en compte d'autres critères par l'unité 111, sans sortir du cadre de l'invention.

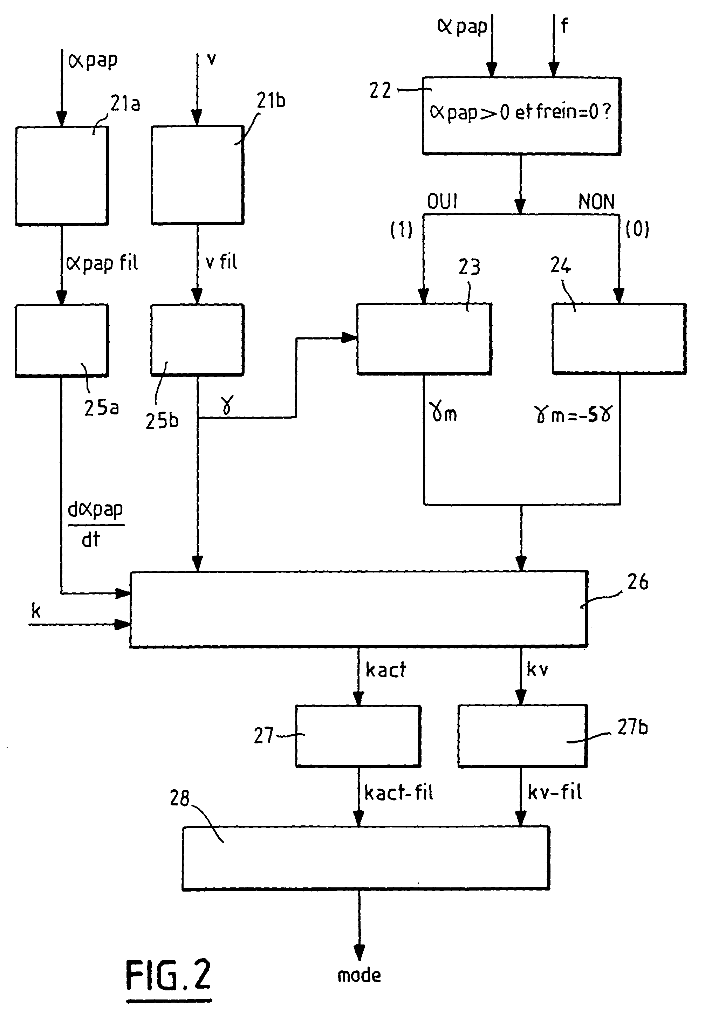

En se reportant à la figure 2, on voit que les signaux d'ouverture du papillon des gaz, et de vitesse véhicule, sont en réalité des signaux filtrés $\alpha_{pap-fil}$ et $v_{fil}$ dans les blocs fonctionnels 21a et 21b, par exemple au travers de filtres du type passe-bas. Les signaux $\alpha_{pap-fil}$ et $v_{fil}$ sont ensuite dérivés (cf blocs fonctionnels 25a et 25b), avant d'être exploités pour le calcul d'un coefficient d'activité $K_{act}$ (cf bloc fonctionnel 26), conjointement à l'information k, si celle-ci est disponible, et à un signal d'accélération maximale $\gamma_m$.

Plus précisément, le bloc 22 correspond à un test logique effectué à partir des informations $\alpha_{pap}$ et f, de la façon suivante : si $\alpha_{pap}$>o (papillon ouvert) et f = o (frein non sollicité), un signal de valeur 1 est émis, entraînant la prise en compte dans le calcul de $K_{act}$ (cf bloc 26), d'une accélération maximale $\gamma_m$ correspondant à celle qui serait obtenue si le conducteur accélérait à fond, calculée en 23 à partir de la valeur d'accélération $\gamma$ résultant de la dérivation de $v_{fil}$ en 25b. En revanche si $\alpha_{pap}$ = o ou f = 1 (papillon ouvert ou frein sollicité), l'accélération (décélération) maximale $\gamma_m$ prise en compte pour calculer le coefficient $K_{act}$ est celle qu'aurait le véhicule en situation de freinage maximum. Le bloc 22 génère dans ce cas un signal de niveau 1 entraînant en 24 le calibrage de $\gamma_m$ par un -S$\gamma$ correspondant au freinage maximum potentiel, qui est déterminé à partir des caractéristiques du véhicule. Le calibrage 24 se traduit donc par l'envoi du signal -S$\gamma$ au bloc fonctionnel 26.

$K_{act}$ est calculé en 26 à partir des informations $\gamma_m$, $\gamma$, $\frac{d\alpha_{pap}}{dt}$, k, $\gamma$ et $\frac{d\alpha_{pap}}{dt}$ étant respectivement les dérivés de $\alpha_{pap-fil}$ et de v, dont le calcul est opéré en 25a et 25b. Ce calcul peut notamment être effectué de la façon suivante :

- si $\frac{d\alpha_{pap}}{dt}$> $\delta_1$, $K_{act}$ prend une première valeur imposée, par exemple 0,6,

- si $\frac{d\alpha_{pap}}{dt}$> $\delta_2$ > $\delta_1$, ou si k = 1, $K_{act}$t prend une seconde valeur imposée,par exemple 0,9, et

- dans tous les autres cas, $K_{act}$ = $\frac{\gamma}{\gamma_m}$,

$\delta_1$ et $\delta_2$ étant des seuils, fixés par un opérateur de façon à imposer à l'unité 111 la sensibilité souhaitée à l'enfoncement rapide de l'accélérateur, et le cas échéant à la sollicitation du kick-down par le conducteur, $K_{act}$.

$K_{act}$ est de préférence compris entre 0 et 1, sa valeur 0 correspondant à l'inactivité du conducteur, tandis que sa valeur 1 traduit une activité maximale. $K_{act}$ est filtré (cf bloc fonctionnel 27), de façon à disposer par exemple une valeur filtrée de $K_{act}$, $K_{act-fil}$, telle qu'une moyenne glissante de $K_{act}$ sur une durée dépendant éventuellement de l'état d'actionnement du frein.

La sélection du mode de fonctionnement de la transmission est opérée en 28, en fonction des valeurs prises par $K_{act-fil}$. Cette sélection s'effectue en fonction des valeurs et du nombre de modes disponibles. Elle peut être réalisée en logique binaire ou en logique floue. Dans le cas particulier où l'on dispose des trois modes de fonctionnement mentionnés plus haut, "ECO", "NORMAL", et "SPORT", la sélection du mode de fonctionnement peut par exemple se résumer de la façon suivante :

$K_{act}$ faible (par exemple $K_{act}$ < 0,4) $\Rightarrow$ mode ECO

$K_{act}$ moyen (par exemple 0,4 < $K_{act}$ < 0,7) $\Rightarrow$ mode NORMAL

$K_{act}$ élevé (par exemple 0,7 < $K_{act}$) $\Rightarrow$ mode SPORT,

les plages de valeurs correspondantes de $K_{act}$ pouvant êtres différentes selon que le conducteur freine ou non.

Pour conserver une relative stabilité de la commande, l'invention propose par ailleurs d'introduire dans le calcul du coefficient d'activité $K_{act}$ un terme correctif Kv facilitant le retour ou le maintien de la transmission sur un mode de fonctionnement moins réactif. Kv reflète notamment l'activité du conducteur vis-à-vis de sa pédale d'accélérateur, de la façon suivante :

$$Kv = \frac{\left(\left|d\alpha_{pap}/dt\right|\right)^{3/2}}{(Sdk)^{3/2}}, \text{ si } \frac{d\alpha_{pap}}{dt}>0$$

et Kv = 0 dans tous les autres cas,

Sdk étant un paramètre de normalisation de l'ordre de 30 à 40 %/sec déterminant l'incidence de la dérivée par rapport au temps de l'ouverture papillon $\frac{d\alpha_{pap}}{dt}$ dans le calcul de Kv. Kv est ensuite filtré dans un filtre à moyenne glissante (cf bloc fonctionnel 27b) délivrant terme de stabilité filtrée $Kv_{-fil}$, de sorte que le coefficient exploité dans le bloc fonctionnel 28 pour calculer et déterminer le mode de fonctionnement de la transmission devient :

$$K_{act-fil} + K_{v-fil}.$$

Sans sortir du cadre de l'invention, d'autres situations peuvent être prises en compte en respectant les principes généraux de détermination du style de conduite exposés ci-dessus. En particulier, dans certaines circonstances, telles que la conduite sur une route pentue, le conducteur peut accélérer à fond pour conserver sa vitesse, sans que cette action reflète la réalité d'un comportement sportif. Dans ce cas, il peut être souhaitable d'imposer à $K_{act-fil}$, la valeur qu'il avait avant d'aborder la pente, en vue d'interdire la sélection du mode de fonctionnement le plus sportif. Cette situation peut être gérée par la comparaision d'une variable F, représentative de la somme des efforts résistants appliqués au véhicule qui peut être égale à une différence $\gamma$-$\gamma_{nom}$ entre l'accélération réelle du véhicule et l'accélération nominale à laquelle il serait soumis s'il roulait sur le plat, sans vent et à vide, calculée à l'aide des paramètres $\alpha_{pap}$, v, n, $\omega$, à un seuil d'effort $S_F$ (n) dépendant de la pente et/ou de la charge du véhicule, et du rapport de boîte n.

Le coefficient d'activité filtré $K_{act-fil}$ peut ainsi être borné de façon à interdire au moins l'adoption du mode de fonctionnement le plus sportif, lorsque l'ouverture du papillon des gaz $\alpha_{pap}$ est supérieure à un seuil d'ouverture préétabli $\alpha_1$, et que F est supérieur à SF.

Enfin il faut noter que lorsque le conducteur a le pied enfoncé complètement sur l'accélérateur, le terme correctif, Kv devient nul du fait de la non activité de la pédale d'accélération. Dans ce cas, la valeur $K_{v-fil}$ peut avantageusement être maintenue à celle qu'il avait avant que le conducteur n'appuie à fond, pour conserver en "mémoire" cette activité passée.

Les avantages du procédé de commande proposé par l'invention sont nombreux. Parmi ceux-ci, il faut noter que le rapport entre l'accélération instantanée du véhicule et son accélération maximale théorique dans les mêmes conditions, reflète avec précision l'utilisation effective des possibilités du véhicule par son conducteur. Par ailleurs, ce critère qui est homogène, puisque c'est le même en phase d'accélération et de freinage, prend en considération les conditions de charge et de pente du véhicule dans le calcul de l'accélération instantanée. De plus, les calculs mis en commun pour qualifier le style de conduite sont simples, car ils sont limités à l'application d'une seule formule et ne nécessitent pas l'utilisation de règles floues.

**Revendications**

1. Procédé de commande d'une transmission automatique à rapports étagés en fonction du style de conduite du conducteur, selon lequel le calculateur de la transmission applique différentes lois de passage des rapports selon la valeur d'un coefficient d'activité ($K_{act}$) dépendant de la vitesse de déplacement du véhicule (v) du rapport engagé (n) du régime moteur ($\omega$), et de l'activation du frein (f), **caractérisé en ce que** si le conducteur a le pied appuyé sur l'accélérateur , le coefficient d'activité ($K_{act}$) est égal au rapport ($\gamma$/$\gamma_m$,) de l'accélération instantanée du véhicule ($\gamma$) à son accélération maximale potentielle pied à fond ($\gamma_m$) sur le même rapport.

2. Procédé de commande selon la revendication 1, **caractérisé en ce que** si le conducteur freine, le coefficient d'activité ($K_{act}$) est égal au rapport ($\gamma$/$\gamma_m$) de la décélération instantanée du véhicule ($\gamma$) à sa décélération potentielle maximale ($\gamma_m$.).

3. Procédé de commande selon la revendication 1 ou 2, **caractérisé en ce que** si le conducteur a le pied appuyé sur l'accélérateur, ($K_{act}$) est majoré par un terme correctif (Kv), reflétant l'activité du conducteur sur sa pédale d'accélérateur.

4. Procédé de commande selon la revendication 3, **caractérisé en ce que** le terme correctif (Kv) dépend de la dérivée par rapport au temps, de l'ouverture du papillon des gaz ($\alpha_{pap}$).

**5.** Procédé de commande selon l'une des revendications 1 à 4, **caractérisé en ce que** le coefficient d'activité ($K_{act}$) est borné de façon à interdire au moins l'adoption du mode de fonctionnement le plus sportif lorsque l'ouverture du papillon des gaz ($\alpha_{pap}$) est supérieure à un seuil d'ouverture préétabli ($\alpha_1$) et que la somme des efforts résistants (F) appliqués au véhicule est supérieure à un seuil d'effort ($S_F$) préétabli.

**6.** Procédé de commande selon la revendication 5, **caractérisé en ce que** la somme d'efforts (F) est évaluée à partir de la différence ($\gamma$-$\gamma_{nom}$) entre l'accélération instantanée du véhicule et l'accélération à laquelle il serait soumis s'il roulait sur le plat, sans vent et à vide.

**7.** Procédé de commande selon la revendication 5 ou 6, **caractérisé en ce que** le seuil d'effort ($S_F$) dépend de la pente, du rapport (n) de la transmission, et/ou de la charge du véhicule.

**8.** Procédé de commande selon l'une des revendications précédentes, **caractérisé en ce qu'**il permet d'imposer automatiquement au calculateur de la transmission des lois de passage privilégiant respectivement une réduction de la consommation ou le caractère sportif de la conduite.

**9.** Procédé de commande selon l'une des revendications 3 à 5, **caractérisé en ce que** si le conducteur accélère à fond, le terme correctif, (Kv) est maintenu à sa valeur antérieure.

**10.** Procédé de commande selon l'une des revendications précédentes, **caractérisé en ce que** le calculateur de la transmission prend en considération un signal d'actionnement du rétro-contact (k), égal à 0 ou 1.

**Patentansprüche**

**1.** Verfahren zur Steuerung eines automatischen Getriebes mit abgestuften Gängen in Abhängigkeit vom Fahrstil des Fahrers, nach welchem der Rechner für das Getriebe verschiedene Regeln für den Wechsel der Gänge je nach dem Wert eines Aktivitätskoeffizienten ($K_{akt}$) in Anwendung bringt, der von der Fahrgeschwindigkeit des Fahrzeugs (v), dem eingelegten Gang (n), der Motordrehzahl ($\omega$) und der Betätigung der Bremse abhängt, **dadurch gekennzeichnet dass**, wenn der Fahrer den Fuß auf dem Gaspedal hat, der Aktivitätskoeffizient ($K_{akt}$) gleich dem Verhältnis ($\gamma/\gamma_m$) von augenblicklicher Beschleunigung des Fahrzeugs ($\gamma$) zu seiner möglichen Maximalbeschleunigung bei durchgedrücktem Gaspedal ($\gamma_m$) im selben Gang ist.

**2.** Verfahren zur Steuerung nach Anspruch 1, **dadurch gekennzeichnet, dass**, wenn der Fahrer bremst, der Aktivitätskoeffizient ($K_{akt}$) gleich dem Verhältnis ($\gamma/\gamma_m$) der Geschwindigkeitsabnahme des Fahrzeugs ($\gamma$) zu seiner maximal möglichen Geschwindigkeitsabnahme ($\gamma_m$) ist.

**3.** Verfahren zur Steuerung nach Anspruch 1 oder 2, **dadurch gekennzeichnet, dass**, wenn der Fahrer den Fuß auf dem Gaspedal hat, der Aktivitätskoeffizient ($K_{akt}$) um einen Korrekturterm (Kv) größer ist, der die Aktivität des Fahrers auf dem Gaspedal widerspiegelt.

**4.** Verfahren zur Steuerung nach Anspruch 3, **dadurch gekennzeichnet, dass** der Korrekturterm (Kv) von der zeitlichen Ableitung der Öffnung der Ventilklappe für das Gas ($\alpha_{Kla}$) abhängt.

**5.** Verfahren zur Steuerung nach einem der Ansprüche 1 bis 4, **dadurch gekennzeichnet** das der Aktivitätskoeffizient $K_{akt}$ in der Weise begrenzt wird, dass zumindest die Übernahme des sportlichsten Funktionsmodus unterbunden wird, wenn das Öffnen der Ventilklappe der Gase ($\alpha_{Kla}$) größer ist als ein vorher eingestellter Schwellwert für das Öffnen ($\alpha_1$) und dass die Summe der Fahrwiderstände (F), die auf das Fahrzeug wirken, größer als ein vorher eingestellter Schwellwert der Widerstände (SF) ist.

**6.** Verfahren zur Steuerung nach Anspruch 5, **dadurch gekennzeichnet, dass** die Summe der Widerstände (F) auf Grund des Unterschiedes ($\gamma$ - $\gamma_{nom}$) zwischen der augenblicklichen Beschleunigung des Fahrzeugs und derjenigen Beschleunigung ermittelt wird, die es hätte, wenn es auf einer ebenen Fläche ohne Wind und unbeladen fahren würde.

**7.** Verfahren zur Steuerung nach Anspruch 5 oder 6, **dadurch gekennzeichnet, dass** der Schwellwert des Widerstandes ($S_F$) vom Anstieg, vom Gang (n) und/oder der Beladung des Fahrzeugs abhängt.

**8.** Verfahren zur Steuerung nach einem der vorangegangenen Ansprüche, **dadurch gekennzeichnet dass** es ermöglicht, automatisch in den Getrieberechner Gangwechselregeln einzugeben, die einer Herabsetzung des Verbrauchs bzw. der sportlichen Fahrweise den Vorrang geben.

**9.** Verfahren zur Steuerung nach einem der Ansprüche 3 bis 5, **dadurch gekennzeichnet, dass**, wenn der Fahrer voll beschleunigt, der Korrekturterm (Kv) auf seinem vorherigen Wert gehalten wird.

**10.** Verfahren zur Steuerung nach einem der vorangegangenen Ansprüche, **dadurch gekennzeichnet dass** der Rechner für das Getriebe ein Betätigungssignal des Bremskontaktes (k) gleich 0 oder 1 berücksichtigt.

**Claims**

**1.** Method for control of an automatic transmission with gears stepped according to the driving style of the driver, according to which the transmission computer applies different rules for gear changing according to the value of a an activity coefficient ($K_{act}$) depending upon the speed of travel of the vehicle (v), the gear selected (n), the engine speed ($\omega$) and the activation of the brake (f),
**characterised in that** if the driver has his foot pressing on the accelerator, the activity coefficient ($K_{act}$) is equal to the ratio ($\gamma/\gamma_m$) of the momentary acceleration of the vehicle ($\gamma$) to its potential maximum foot-to-the-floor acceleration ($\gamma_m$) in the same gear.

**2.** Method of control according to claim 1, **characterised in that** if the driver brakes, the activity coefficient ($K_{act}$) is equal to the ratio ($\gamma/\gamma_m$) of the momentary deceleration of the vehicle ($\gamma$) to its potential maximum deceleration ($\gamma_m$).

**3.** Method for control according to claim 1 or 2, **characterised in that** if the driver has his foot pressing on the accelerator, the activity coefficient ($K_{act}$) is increased by a corrective term (Kv) reflecting the activity of the driver on his accelerator pedal.

**4.** Method for control according to claim 3, **characterised in that** the corrective term (Kv) depends upon the derivative, with respect to time, of the opening of the throttle valve ($\alpha_{pap}$).

**5.** Method for control according to one of claims 1 to 4, **characterised in that** the activity coefficient ($K_{act}$) is limited such as to prevent at least the adoption of the sportiest operating mode when the opening of the throttle valve ($\alpha_{pap}$) is more than a pre-determined opening threshold ($\alpha_1$) and the sum of resistive forces (F) applied to the vehicle is more than a pre-determined force threshold ($S_F$).

**6.** Method for control according to claim 5, **characterised in that** the sum of forces (F) is evaluated from the difference ($\gamma - \gamma_{nom}$) between the momentary acceleration of the vehicle and the acceleration to which it would be subjected were it to travel on the flat, without wind, and on empty.

**7.** Method for control according to claim 5 or 6, **characterised in that** the force threshold ($S_F$) depends on the incline, the transmission ratio (n), and/or the vehicle load.

**8.** Method for control according to one of the preceding claims, **characterised in that** it allows rules for gear changing to be automatically imposed on the transmission computer that favour, respectively, reduction in fuel consumption or the sporting driving characteristic.

**9.** Method for control according to one of claims 3 to 5, **characterised in that** if the driver floors the accelerator, the corrective term (Kv) is maintained at its previous value.

**10.** Method for control according to one of the preceding claims, **characterised in that** the transmission computer takes into account a retro-contact trigger signal (k) equal to 0 or 1.

EP 0 777 071 B1

1 —— ∝pap ——▶

2 —— Vveh ——▶

3 —— N ——▶

4 —— Nmot ——▶

5 —— frein ——▶

6 —— kick-down ——▶

111

—— mode ——▶ TCU —— n ——▶ Transmission

112

113

FIG.1

**FIG.2**